# EUROPÄISCHE PATENTANMELDUNG

(11) **EP 4 227 625 A1**
(43) Veröffentlichungstag der Anmeldung: **16.08.2023**
(21) Anmeldenummer: 22156810.8
(22) Anmeldetag: 15.02.2022
(51) Int. Cl.: F27B 3/08, C21C 5/52, F27B 3/28, F27D 11/10, H05B 7/144

(54) **BETRIEBSVERFAHREN FÜR EINEN LICHTBOGENOFEN**

(71) Anmelder: Primetals Technologies Germany GmbH, 91058 Erlangen (DE)
(72) Erfinder: Matschullat, Thomas, 90542 Eckental (DE); Winter, Günther, 91077 Neunkirchen/Brand (DE)
(74) Vertreter: Metals@Linz

(57) **Zusammenfassung**

Ein Ofengefäß (1) eines Lichtbogenofens wird mit Metall (2) in festem Aggregatszustand beschickt. Danach bezieht eine Energieversorgungseinrichtung (3) des Lichtbogenofens aus einem Versorgungsnetz (4) elektrische Energie und führt die bezogene elektrische Energie über einen Ofentransformator (5) Elektroden (6) des Lichtbogenofens zu, so dass sich zwischen den Elektroden (6) und dem Metall (2) bzw. der Metallschmelze (13) Lichtbögen (12) ausbilden, durch die das Metall (2) zu der Metallschmelze (13) geschmolzen wird. Schließlich wird die Metallschmelze (13) aus dem Ofengefäß (1) entnommen. Die Anzahl an Elektroden (6) liegt mindestens bei drei. Die Energieversorgungseinrichtung (3) stellt für mindestens zwei der Elektroden (6) individuell die Betriebsfrequenz (fa, fb) der jeweiligen Elektrode (6a, 6b) ein.

## Beschreibung

### Gebiet der Technik

Die vorliegende Erfindung geht aus von einem Betriebsverfahren für einen Lichtbogenofen, wobei eine Energieversorgungseinrichtung des Lichtbogenofens zwischen einem Beschicken eines Ofengefäßes des Lichtbogenofens mit Metall in festem Aggregatszustand und einem Entnehmen einer Metallschmelze aus dem Ofengefäß aus einem Versorgungsnetz elektrische Energie bezieht und die bezogene elektrische Energie über einen Ofentransformator zumindest einer ersten, einer zweiten und einer dritten Elektrode des Lichtbogenofens zuführt, so dass sich zwischen den Elektroden und dem Metall bzw. der Metallschmelze Lichtbögen ausbilden, durch die das Metall zu der Metallschmelze geschmolzen wird.

Die vorliegende Erfindung geht weiterhin aus von einem Steuerprogramm für eine Steuereinrichtung eines Lichtbogenofens, wobei das Steuerprogramm Maschinencode umfasst, der von der Steuereinrichtung abarbeitbar ist, wobei die Abarbeitung des Maschinencodes durch die Steuereinrichtung bewirkt, dass die Steuereinrichtung den Lichtbogenofen gemäß einem derartigen Betriebsverfahren betreibt.

Die vorliegende Erfindung geht weiterhin aus von einer Steuereinrichtung eines Lichtbogenofens, wobei die Steuereinrichtung mit einem derartigen Steuerprogramm programmiert ist, so dass die Abarbeitung des Maschinencodes durch die Steuereinrichtung bewirkt, dass die Steuereinrichtung den Lichtbogenofen gemäß einem derartigen Betriebsverfahren betreibt.

Die vorliegende Erfindung geht weiterhin aus von einem Lichtbogenofen,
- wobei der Lichtbogenofen ein Ofengefäß aufweist, das mit Metall beschickbar und aus dem eine Metallschmelze entnehmbar ist,
- wobei der Lichtbogenofen eine Energieversorgungseinrichtung und Elektroden sowie einen Ofentransformator aufweist,
- wobei die Energieversorgungseinrichtung eingangsseitig mit einem Versorgungsnetz und ausgangsseitig über den Ofentransformator mit den Elektroden verbunden ist,
- wobei der Lichtbogenofen eine Steuereinrichtung aufweist, von der zumindest die Energieversorgungseinrichtung ansteuerbar ist,
- wobei die Steuereinrichtung so wie obenstehend erläutert ausgebildet ist.

### Stand der Technik

Die genannten Gegenstände sind allgemein bekannt. Beispielsweise kann auf die WO 2015/176 899 A1 verwiesen werden. Auch die EP 1 026 921 A1 und die EP 3 124 903 A1 können in diesem Zusammenhang genannt werden.

### Zusammenfassung der Erfindung

Beim Schmelzen von Metall - insbesondere Stahl - in einem Lichtbogenofen erfolgt die Zufuhr der elektrischen Energie zu den Elektroden des Lichtbogenofens über einen Ofentransformator. Oftmals ist der Ofentransformator über einen Mittelspannungstransformator an das Versorgungsnetz angeschlossen. Der Ofentransformator stellt mehrere Spannungsstufen zur Verfügung. Für den Bereich konstanter Leistung und andere Hochstrombereiche kann die jeweilige Spannungsstufe am Ofentransformator gewählt werden. Eine Feinregelung innerhalb einer bestimmten Spannungsstufe kann beispielsweise mittels einer Impedanzregelung erfolgen.

Bei dieser Vorgehensweise sind nur einige wenige Spannungsstufen möglich, und die Elektrodenströme unterliegen starken Schwankungen. Zur Reduzierung der Schwankungen werden die Positionierungen der Elektroden mechanisch geregelt, meist über hydraulische Verstelleinrichtungen. Das mechanische Verstellen der Elektroden weist eine erheblich geringere Dynamik auf als das reale Verhalten der Lichtbögen. Die Schwankungen können daher nur unzureichend ausgeregelt werden. Weiterhin führen die Schwankungen zu erheblichen Belastungen der Bauteile, beispielsweise der Hochstromkabel, der stromführenden Tragarme, der Hydraulikzylinder usw. Die Schwankungen treten sowohl in der Schmelzphase als auch in einer nachfolgenden Flachbadphase auf.

Bei der Einstellung der Elektrodenspannung über die Spannungsstufen des Ofentransformators muss die Positionierung der Elektroden laufend nachgeregelt werden. Die Nachregelung kann beispielsweise derart erfolgen, dass auf eine bestimmte Impedanz oder eine bestimmte Leistung geregelt wird. Da die Dynamik der Positioniereinrichtung jedoch im Vergleich zu den Veränderungen im elektrischen System des Lichtbogens relativ niedrig ist, verbleiben gewisse Schwankungen, die nicht ausgeregelt werden können. Dadurch ist die Energieeinbringung in die Stahlschmelze nicht optimal.

Aus den Dokumenten des Standes der Technik, insbesondere aus der WO 2015/176 899 A1 und der EP 3 124 903 A1 und in begrenztem Umfang auch aus der EP 1 026 921 A1, sind Vorgehensweisen bekannt, bei denen die Elektrodenspannungen kontinuierlich eingestellt werden können. Diese Ausgestaltungen bieten gegenüber einer Einstellung der Elektrodenspannung über Spannungsstufen des Ofentransformators erhebliche Vorteile. So können die Elektrodenspannungen nicht nur stufenweise, sondern kontinuierlich variiert werden. Weiterhin kann der Ofentransformator einfacher ausgebildet sein, weil er nicht mehrere Spannungsstufen zur Verfügung stellen muss. Weiterhin ist die Einstellung der Elektrodenspannungen mit erheblich größerer Dynamik möglich als die Positionierung der Elektroden. Schließlich werden durch diese Ausgestaltungen weitere Arten der Regelung ermöglicht.

Trotz der Flexibilität beim Betreiben des Lichtbogenofens, die durch die Möglichkeit zum kontinuierlichen Einstellen der Elektrodenspannungen erreicht wird, ist der Betrieb des Lichtbogenofens im Stand der Technik oftmals immer noch nicht optimal. Beispielsweise kann es immer noch zu einer suboptimalen Energieeinbringung in das Metall bzw. die Metallschmelze und auch zu Lichtbogenabrissen kommen.

Die Aufgabe der vorliegenden Erfindung besteht darin, Möglichkeiten zu schaffen, mittels derer die Nachteile des Standes der Technik vermieden werden können.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 12.

Erfindungsgemäß wird ein Betriebsverfahren der eingangs genannten Art dadurch ausgestaltet, dass die Energieversorgungseinrichtung eine Betriebsfrequenz der ersten Elektrode und eine Betriebsfrequenz der zweiten Elektrode individuell einstellt.

Dadurch kann zumindest für die erste und die zweite Elektrode die jeweilige Betriebsfrequenz optimal für den konkreten Betrieb der jeweiligen Elektrode eingestellt werden.

Es ist möglich, dass die Betriebsfrequenzen der ersten und der zweiten Elektrode gleich sind. Dies ist jedoch nur dann der Fall, wenn sich aufgrund der individuellen Einstellung der Betriebsfrequenzen zufällig gleiche Werte ergeben. In der Regel sind die Betriebsfrequenz für die erste und die zweite Elektrode jedoch voneinander verschieden.

Es ist möglich, dass die Betriebsfrequenz der ersten Elektrode zeitlich konstant ist. In der Regel führt es jedoch zu einem besseren Betrieb des Lichtbogenofens, wenn die Betriebsfrequenz der ersten Elektrode zeitlich variiert. Vorzugsweise variiert die Betriebsfrequenz der ersten Elektrode in Abhängigkeit von einem Prozesszustand des Lichtbogenofens. Der Prozesszustand kann insbesondere durch Auswertung elektrischer oder akustischer Betriebsgrößen des Lichtbogenofens ermittelt werden. Die gleiche Vorgehensweise kann natürlich auch für die zweite Elektrode ergriffen werden.

Es ist möglich, dass die Betriebsfrequenz der zweiten Elektrode unabhängig von der Betriebsfrequenz der ersten Elektrode eingestellt wird. Oftmals ist es jedoch von Vorteil, wenn die Betriebsfrequenz der zweiten Elektrode unter Berücksichtigung der Betriebsfrequenz der ersten Elektrode eingestellt wird. Beispielsweise kann die Betriebsfrequenz der zweiten Elektrode derart eingestellt werden, dass sie einen bestimmten Abstand zur Betriebsfrequenz der ersten Elektrode aufweist. Auch kann die Betriebsfrequenz der zweiten Elektrode zwar zunächst unabhängig von der Betriebsfrequenz der ersten Elektrode ermittelt werden, die so ermittelte Betriebsfrequenz aber nur dann übernommen werden, wenn sie mindestens den bestimmten Abstand von der Betriebsfrequenz der ersten Elektrode aufweist, und anderenfalls die Betriebsfrequenz der zweiten Elektrode so eingestellt werden, dass sie den bestimmten Abstand von der Betriebsfrequenz der ersten Elektrode aufweist.

Es ist möglich, dass den Elektroden des Lichtbogenofens ihre jeweilige "Rolle" als erste Elektrode, zweite Elektrode usw. fest zugeordnet ist. Vorzugsweise wird den Elektroden des Lichtbogenofens jedoch dynamisch zugeordnet, welche von ihnen die erste Elektrode ist und welche von ihnen die zweite Elektrode ist.

Der jeweilige Status als erste, zweite und gegebenenfalls dritte usw. Elektrode wird also - jeweils betrachtet für den Zeitraum zwischen dem Beschicken des Ofengefäßes mit Metall und dem Entnehmen der Metallschmelze aus dem Ofengefäß - nicht einmalig statisch festgelegt, sondern von Zeit zu Zeit geändert. Ein und dieselbe Elektrode des Lichtbogenofens kann also zu einem bestimmten Zeitpunkt die erste Elektrode sein, zu einem anderen Zeitpunkt die zweite Elektrode und zu einem wieder anderen Zeitpunkt weder die erste noch die zweite Elektrode. Wenn im Falle von insgesamt drei Elektroden des Lichtbogenofens zum einem bestimmten Zeitpunkt x Elektrode a mit einer Frequenz fa und Elektrode b mit einer Frequenz fb betrieben wird und der Strom durch Elektrode c durch den Strom durch die Elektroden a und b festgelegt ist, kann beispielsweise zu einem späteren Zeitpunkt y Elektrode b mit der Frequenz fa und Elektrode c mit der Frequenz fb betrieben werden und folglich der Strom durch Elektrode a durch den Strom durch die Elektroden b und c festgelegt sein. Die Übergänge können sprungartig oder kontinuierlich erfolgen, im letztgenannten Fall insbesondere sinusförmig.

Die Elektroden des Lichtbogenofens sind in aller Regel höhenverstellbar. Hierbei ist es möglich, dass die Elektroden nur gemeinsam oder unabhängig voneinander höhenverstellbar sind. Im Falle einer unabhängigen Verstellbarkeit kann die dynamische Zuordnung der jeweiligen "Rolle" zu den Elektroden, mit einer Vorgehensweise kombiniert sein, bei der die Positionierung der jeweiligen Elektrode des Lichtbogenofens in Abhängigkeit davon bestimmt wird, ob sie die erste, die zweite oder eine andere Elektrode ist. Der Begriff "in Abhängigkeit" soll nicht bedeuten, dass die "Rolle" der jeweiligen Elektrode die Positionierung der jeweiligen Elektrode vollständig bestimmt. Es ist vielmehr ausreichend, dass die "Rolle" der jeweiligen Elektrode mit berücksichtigt wird.

Zur Realisierung einer individuellen Höhenverstellbarkeit kann es bereits ausreichend sein, wenn zusätzlich zu einer gemeinsamen Verstellung der Elektroden nur eine geringe Überlagerung einer zusätzlichen Bewegung der einzelnen Elektroden möglich ist. In diesem Fall werden bei n Elektroden lediglich n-1 Einrichtungen zum Bewirken der zusätzlichen Bewegungen benötigt.

Zwischen dem Beschicken des Ofengefäßes mit dem Metall und dem Entnehmen der Metallschmelze aus dem Ofengefäß wird der Lichtbogenofen zunächst in einer Schmelzphase und sodann in einer Flachbadphase betrieben. In der Schmelzphase wird das Metall zu der Metallschmelze geschmolzen. Die Schmelzphase kann ihrerseits in eine Anfangsphase und eine Endphase unterteilt sein. Die Anfangsphase wird oftmals als Bohrphase bezeichnet. In der Endphase erfolgt der Großteil des Einschmelzens des Metalls. In der Flachbadphase wird die Metallschmelze weiter aufgeheizt.

In manchen Fällen ist weiterhin die Beschickung des Ofengefäßes mit dem Metall sehr inhomogen, so dass sich im Bereich unterhalb einer Elektrode größere Metallstücke und im Bereich unterhalb einer anderen Elektrode kleinere Metallstücke befinden. In diesem Fall kann es von Vorteil sein, die Betriebsfrequenz der ersten Elektrode während der Schmelzphase in Abhängigkeit von der Größe der mittels der ersten Elektrode einzuschmelzenden Stücke des Metalls zu bestimmen. Die Betriebsfrequenz der ersten Elektrode kann während der Schmelzphase insbesondere derart bestimmt werden, dass sie umso kleiner ist, je größer die mittels der ersten Elektrode einzuschmelzenden Stücke des Metalls sind. Vorzugsweise ist weiterhin die Betriebsfrequenz der ersten Elektrode während der Schmelzphase oder während einer Endphase der Schmelzphase größer als eine Netzfrequenz, mit der das Versorgungsnetz betrieben wird, insbesondere mindestens 10 Hz größer. Die gleiche Vorgehensweise kann natürlich auch für die zweite Elektrode ergriffen werden.

Vorzugsweise werden den Elektroden zugeführte elektrische Energien derart bestimmt, dass die Elektroden im zeitlichen Mittel jeweils die gleiche Energiemenge in das Metall bzw. die Metallschmelze einbringen. Das zeitliche Mittel wird hierbei nicht über eine einzelne Periode der jeweiligen Betriebsfrequenz der jeweiligen Elektrode gebildet, sondern über den gesamten Betrieb der Elektroden zwischen dem Beschicken des Ofengefäßes mit Metall und dem Entnehmen der Metallschmelze aus dem Ofengefäß oder zumindest über eine Betriebsphase des Lichtbogenofens (Anfangsphase der Schmelzphase, Endphase der Schmelzphase und Flachbadphase oder Schmelzphase und Flachbadphase). Dadurch kann insbesondere eine Vergleichmäßigung der Temperatur der Metallschmelze erreicht werden.

Die Aufgabe wird weiterhin durch ein Steuerprogramm mit den Merkmalen des Anspruchs 13 gelöst. Erfindungsgemäß bewirkt die Abarbeitung des Maschinencodes durch die Steuereinrichtung, dass die Steuereinrichtung den Lichtbogenofen gemäß einem erfindungsgemäßen Betriebsverfahren betreibt.

Die Aufgabe wird weiterhin durch eine Steuereinrichtung mit den Merkmalen des Anspruchs 14 gelöst. Erfindungsgemäß ist die Steuereinrichtung mit einem erfindungsgemäßen Steuerprogramm programmiert, so dass sie den Lichtbogenofen gemäß einem erfindungsgemäßen Betriebsverfahren betreibt.

Die Aufgabe wird weiterhin durch einen Lichtbogenofen mit den Merkmalen des Anspruchs 15 gelöst. Erfindungsgemäß ist die Steuereinrichtung als erfindungsgemäße Steuereinrichtung ausgebildet.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Blockschaltbild eines Lichtbogenofens,
- FIG 2: ein Ofengefäß während einer Schmelzphase,
- FIG 3: ein Ablaufdiagramm,
- FIG 4: das Ofengefäß während einer Flachbadphase,
- FIG 5: ein Ablaufdiagramm,
- FIG 6: ein Zeitdiagramm,
- FIG 7: ein weiteres Zeitdiagramm und
- FIG 8: eine funktionale Abhängigkeit.

### Beschreibung der Ausführungsformen

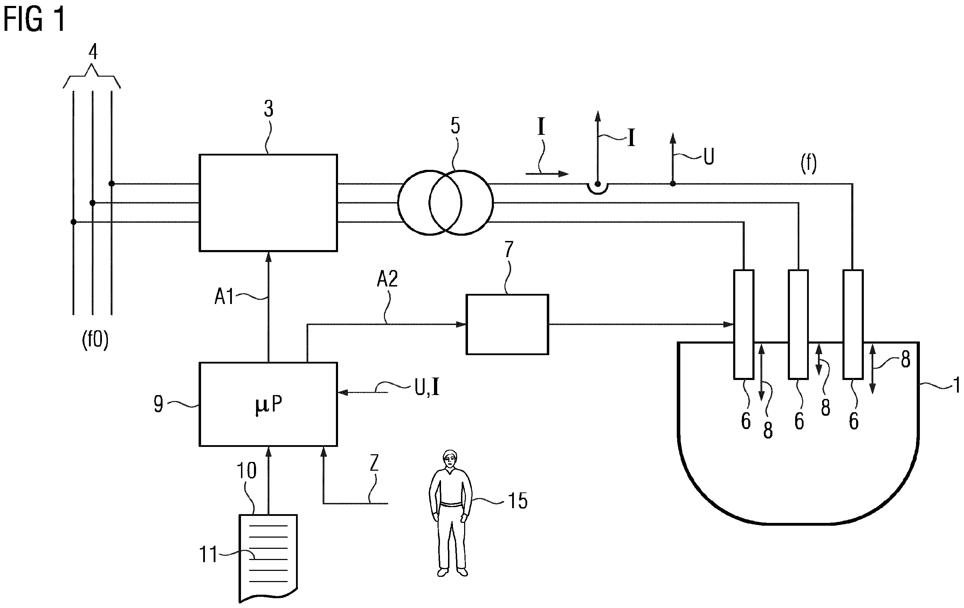

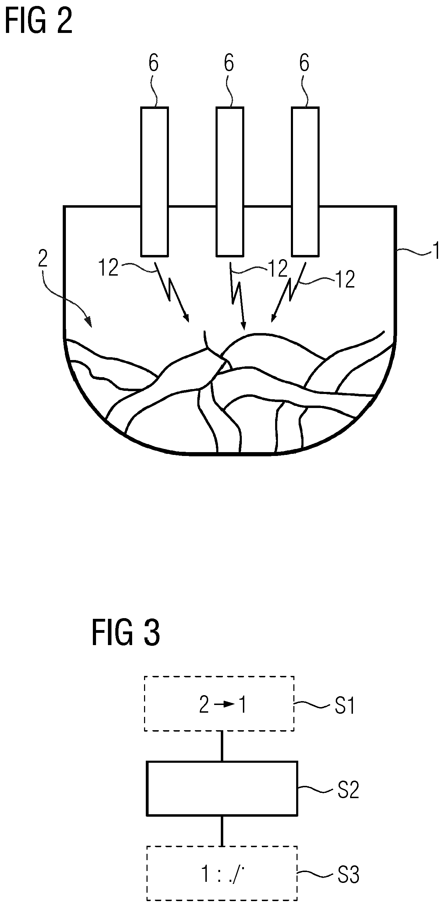

Gemäß FIG 1 weist ein Lichtbogenofen ein Ofengefäß 1 auf. Das Ofengefäß 1 kann - siehe FIG 2 - mit Metall 2 beschickt werden. Das Metall 2 wird dem Ofengefäß 1 beim Beschicken in festem Aggregatszustand zugeführt. Es kann sich bei dem Metall 2 beispielsweise um Stahl und im Falle von Stahl insbesondere um Schrott handeln.

Der Lichtbogenofen weist weiterhin eine Energieversorgungseinrichtung 3 auf. Die Energieversorgungseinrichtung 3 ist eingangsseitig mit einem Versorgungsnetz 4 verbunden. Das Versorgungsnetz 4 ist in der Regel ein Mittelspannungsnetz, das eine Nennspannung im 2-stelligen kV-Bereich aufweist und mit einer Netzfrequenz f0 betrieben wird. Die Netzfrequenz f0 liegt in der Regel bei 50 Hz oder 60 Hz. Das Versorgungsnetz 4 ist entsprechend der Darstellung in FIG 1 in der Regel ein Drehstromnetz.

Der Lichtbogenofen weist weiterhin einen Ofentransformator 5 und Elektroden 6 auf. Die Energieversorgungseinrichtung 3 ist ausgangsseitig über den Ofentransformator 5 mit den Elektroden 6 verbunden. Im Rahmen der vorliegenden Erfindung sind mindestens drei Elektroden 6 vorhanden. Oftmals sind exakt drei Elektroden 6 vorhanden. Weiterhin ist der Ofentransformator 5 in aller Regel als Drehstromtransformator ausgebildet. Unabhängig von der konkreten Ausgestaltung liegen an die Elektroden 6 angelegte Elektrodenspannungen U jedoch deutlich unterhalb der Nennspannung des Versorgungsnetzes 4. Die Elektrodenspannung U ist in FIG 1 nur für eine der Elektroden 6 dargestellt. Meist liegen die Elektrodenspannungen U im Bereich von mehreren 100 V. Im Einzelfall sind auch Spannungen oberhalb von 1 kV möglich. 2 kV werden in aller Regel aber nicht überschritten.

In der Regel sind weiterhin Schalteinrichtungen vorhanden, mittels derer die Energieversorgungseinrichtung 3 vom Versorgungsnetz 4 getrennt werden kann. Weiterhin können Schalteinrichtungen vorhanden sein, mittels derer die Energieversorgungseinrichtung 3 vom Ofentransformator 5 und/oder der Ofentransformator 5 von den Elektroden 6 getrennt werden kann. Die Schalteinrichtungen führen rein binäre Schaltvorgänge durch, aber keinerlei Einstellung von Spannungen und Strömen. Weiterhin können primärseitig oder sekundärseitig des Ofentransformators 5 aktive oder passive Filtereinrichtungen angeordnet sein. Die Schalteinrichtungen und auch die Filtereinrichtungen sind für die erfindungsgemäße Funktionsweise untergeordneter Bedeutung und daher in FIG 1 (und auch den anderen FIG) der Übersichtlichkeit halber nicht mit dargestellt.

Die Energieversorgungseinrichtung 3 kann aus dem Versorgungsnetz 4 elektrische Energie beziehen und die bezogene elektrische Energie über den Ofentransformator 5 den Elektroden 6 zuführen. Die Energieversorgungseinrichtung 3 weist zu diesem Zweck in der Regel viele Halbleiterschalter auf. Mögliche Ausgestaltungen der Energieversorgungseinrichtung 3 sind in der WO 2015/176 899 A1 ("Goldstandard") beschrieben. Alternativ können beispielsweise auch die Ausgestaltungen gemäß der EP 3 124 903 A1 oder der EP 1 026 921 A1 verwendet werden. Unabhängig von der konkreten Ausgestaltung der Energieversorgungseinrichtung 3 ist die Energieversorgungseinrichtung 3 jedoch in der Lage, ausgangsseitig - also zum Ofentransformator 5 hin - eine quasi-kontinuierliche Abstufung der an die Elektroden 6 angelegten Elektrodenspannungen U und/oder der den Elektroden 6 zugeführten Elektrodenströme I vorzunehmen. Analog zu der Darstellung für die Elektrodenspannungen U ist der Elektrodenstrom I in FIG 1 ebenfalls nur für eine der Elektroden 6 dargestellt. Auch eine jeweilige Betriebsfrequenz f, mit der die an die Elektroden 6 angelegten Elektrodenspannungen U bzw. die den Elektroden 6 zugeführten Elektrodenströme I variieren, kann mittels der Energieversorgungseinrichtung 3 eingestellt werden. Die jeweilige Betriebsfrequenz f kann nach Bedarf oberhalb oder unterhalb der Netzfrequenz f0 liegen.

Weiterhin weist der Lichtbogenofen eine Positioniereinrichtung 7 auf. Mittels der Positioniereinrichtung 7 können die Elektroden 6, wie in FIG 1 durch Doppelpfeile 8 neben den Elektroden 6 angedeutet ist, positioniert werden. Im einfachsten Fall erfolgt eine gemeinsame Positionierung der Elektroden 6. Vorzugsweise erfolgt aber eine individuelle Positionierung der Elektroden 6. Dies ist in FIG 1 dadurch angedeutet, dass die Doppelpfeile 8 unterschiedlich lang sind. Die Bewegungsrichtung, in welcher die Elektroden 6 positioniert werden, kann vertikal sein. Alternativ kann die Bewegungsrichtung auch gegenüber der Vertikalen leicht geneigt sein. Auch in diesem Fall aber ist die Komponente in Vertikalrichtung die dominierende Komponente der Bewegung. Die Positioniereinrichtung 7 kann beispielsweise eine oder mehrere Hydraulikzylindereinheiten aufweisen.

Schließlich weist der Lichtbogenofen eine Steuereinrichtung 9 auf. Von der Steuereinrichtung 9 wird zumindest die Energieversorgungseinrichtung 3 gesteuert. Die Steuereinrichtung 9 generiert Ansteuerwerte A1, mit denen sie die Energieversorgungseinrichtung 3 ansteuert. Entsprechend den Ansteuerwerten A1 wird die Energieversorgungseinrichtung 3 betrieben.

Oftmals wird von der Steuereinrichtung 9 auch die Positioniereinrichtung 7 gesteuert in diesem Fall generiert die Steuereinrichtung 9 weitere Ansteuerwerte A2, mit denen sie die Positioniereinrichtung 7 ansteuert. Entsprechend diesen Ansteuerwerten A2 wird in diesem Fall die Positioniereinrichtung 7 betrieben.

Die Steuereinrichtung 9 ist als softwareprogrammierbare Steuereinrichtung ausgebildet. Dies ist in FIG 1 durch die Angabe "µP" (für mikroprozessorgesteuert) angedeutet. Die Wirkung- und Betriebsweise der Steuereinrichtung 9 wird durch ein Steuerprogramm 10 bestimmt, mit dem die Steuereinrichtung 9 programmiert ist. Das Steuerprogramm 10 umfasst Maschinencode 11, der von der Steuereinrichtung 9 abarbeitbar ist. Die Abarbeitung des Maschinencodes 11 durch die Steuereinrichtung 9 bewirkt, dass die Steuereinrichtung 9 den Lichtbogenofen gemäß einem Betriebsverfahren betreibt, wie es nachstehend in Verbindung mit den weiteren FIG näher erläutert wird.

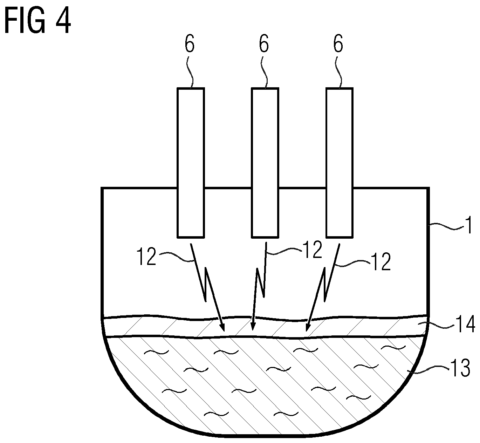

Gemäß FIG 3 wird das Ofengefäß 1 zunächst in einem Schritt S1 mit dem Metall 2 beschickt. FIG 2 zeigt den Zustand nach dem Beschicken des Ofengefäßes 1 unmittelbar nach dem Zünden von Lichtbögen 12 (siehe FIG 2 und 4) durch entsprechende Ansteuerung der Energieversorgungseinrichtung 3 durch die Steuereinrichtung 9.

Sodann erfolgt in einem Schritt S2 der eigentliche Betrieb des Lichtbogenofens. Im Rahmen des Schrittes S2 erfolgen das Anlegen der Elektrodenspannungen U und das Zuführen der Elektrodenströme I zu den Elektroden 6. Dadurch bilden sich zunächst zwischen den Elektroden 6 und dem Metall 2 die Lichtbögen 12 aus, durch die das Metall 2 zu einer Metallschmelze 13 geschmolzen wird. Diese Betriebsphase des Lichtbogenofens wird in der Regel als Schmelzphase bezeichnet. Sie kann in eine Anfangsphase und eine Endphase unterteilt sein, wobei die Anfangsphase meist als Bohrphase bezeichnet wird, die Endphase als Hauptschmelzphase. Sodann bilden sich die Lichtbögen 12 zwischen den Elektroden 6 und der Metallschmelze 13 aus, so dass diese weiter aufgeheizt wird. Diese Betriebsphase des Lichtbogenofens wird in der Regel als Flachbadphase bezeichnet. Dieser Zustand ist in FIG 4 dargestellt. Die Metallschmelze 13 kann in der Flachbadphase an ihrer Oberseite von einer Schlackenschicht 14 bedeckt sein. Die Schlackenschicht 14 kann eine Schaumschlacke sein.

Schließlich wird in einem Schritt S3 die erzeugte Metallschmelze 13 aus dem Ofengefäß 1 entnommen, beispielsweise in eine Pfanne (nicht dargestellt) gegossen.

Der Schritt S2, also der eigentliche Betrieb des Lichtbogenofens, erfolgt durch entsprechende Ansteuerung der Energieversorgungseinrichtung 3. Die Schritte S1 und S3 können ebenfalls unter Steuerung durch die Steuereinrichtung 9 erfolgen. Sie müssen aber nicht unter Steuerung durch die Steuereinrichtung 9 erfolgen. Die Schritte S1 und S3 sind daher in FIG 3 nur gestrichelt dargestellt.

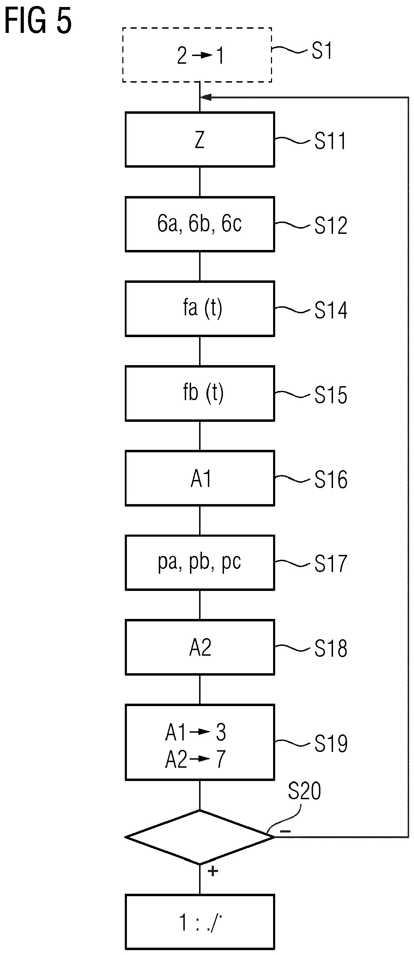

Nachstehend wird in Verbindung mit FIG 5 der Schritt S2, also der eigentliche Betrieb des Lichtbogenofens zwischen dem Beschicken des Ofengefäßes 1 mit dem Metall 2 und dem Entnehmen der Metallschmelze 13 aus dem Ofengefäß 1, näher erläutert. Der Schritt S2 ist zu diesem Zweck in Schritte S11 bis S20 unterteilt. Weiterhin wird im Rahmen der weiteren Erläuterung zwischen den einzelnen Elektroden 6 unterschieden. Zu diesem Zweck wird den Elektroden 6 entsprechend ihrer Abfolge zusätzlich jeweils ein kleiner Buchstabe zugeordnet, wenn zwischen den einzelnen Elektroden 6 unterschieden werden soll. In diesem Fall werden die Elektroden 6 als erste Elektrode 6a, zweite Elektrode 6b und dritte Elektrode 6c bezeichnet. Wenn hingegen nur allgemein von den Elektroden 6 gesprochen wird, wird auch nur das allgemeine Bezugszeichen 6 verwendet. Gleiches gilt für die elektrodenspezifischen Größen wie beispielsweise die Elektrodenspannungen U, die Elektrodenströme I und die Betriebsfrequenzen f.

Gemäß FIG 5 ermittelt die Steuereinrichtung 9 im Schritt S11 einen Zustand Z des Lichtbogenofens. Der Zustand Z gibt an, in welchem Ausmaß der Betrieb des Lichtbogenofens zwischen dem Beschicken mit dem Metall 2 und dem Entnehmen der Metallschmelze 13 fortgeschritten ist. Im einfachsten Fall wird der Zustand Z der Steuereinrichtung 9 von einer Bedienperson 15 (siehe FIG 1) vorgegeben. Alternativ ist es möglich, dass die Steuereinrichtung 9 den Zustand Z direkt aufgrund der Zeit t ermittelt, die seit dem erstmaligen Zünden der Lichtbögen 12 nach dem Beschicken des Ofengefäßes 1 verstrichen ist. Vorzugsweise wertet die Steuereinrichtung 9 im Schritt S12 jedoch messtechnisch erfasste Istgrößen des Lichtbogenofens aus. Beispielsweise ist es möglich, dass die Steuereinrichtung 9 die Elektrodenströme I und/oder die Elektrodenspannungen U auswertet, insbesondere deren Schwankungen. Auch kann die Steuereinrichtung 9 akustische Größen des Lichtbogenofens auswerten, beispielsweise den Geräuschpegel oder das akustische Spektrum des erzeugten Geräuschs.

Im Schritt S12 legt die Steuereinrichtung 9 fest, welche der Elektroden 6 die erste Elektrode 6a, die zweite Elektrode 6b und die dritte Elektrode 6c ist. Die Festlegung kann statisch sein. Alternativ kann sie in direkter Abhängigkeit von der Zeit t erfolgen, die seit dem erstmaligen Zünden der Lichtbögen 12 nach dem Beschicken des Ofengefäßes 1 verstrichen ist. Wiederum alternativ kann sie in direkter Abhängigkeit von der Zeit erfolgen, die seit dem Beginn des jeweiligen Zustands Z verstrichen ist. In den beiden letztgenannten Fällen wird also den Elektroden 6 dynamisch zugeordnet, welche von ihnen die erste Elektrode 6a und welche die zweite Elektrode 6b ist. Die Elektroden 6 können also von Zeit zu Zeit ihre Rollen tauschen.

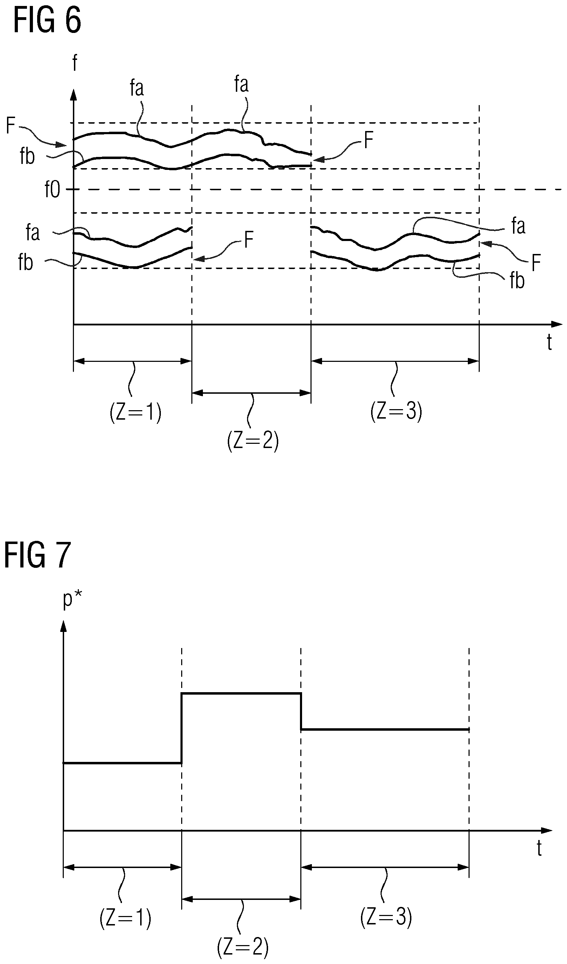

Im Schritt S13 bestimmt die Steuereinrichtung 9 einen Frequenzbereich F, in dem die Elektrodenströme I und/oder die Elektrodenspannungen U liegen sollen. Der Frequenzbereich F kann insbesondere vom Zustand Z abhängig sein. Beispielsweise ist es entsprechend der Darstellung in FIG 6 möglich, dass der Frequenzbereich F während der Endphase der Schmelzphase (Zustand Z = 2) ausschließlich Frequenzen f umfasst, die größer als die Netzfrequenz f0 sind. Ebenso ist es möglich, dass der Frequenzbereich F während der Flachbadphase (Zustand Z = 3) ausschließlich Frequenzen f umfasst, die kleiner als die Netzfrequenz f0 sind. Schließlich ist es möglich, dass der Frequenzbereich F während der Anfangsphase der Schmelzphase (Zustand Z = 1) alternativ ausschließlich Frequenzen f umfasst, die größer als die Netzfrequenz f0 sind, oder ausschließlich Frequenzen f umfasst, die kleiner als die Netzfrequenz f0 sind.

Vorzugsweise weist der Frequenzbereich F von der Netzfrequenz stets einen gewissen Mindestabstand auf. Der Mindestabstand kann beispielsweise zwischen 7 Hz und 13 Hz liegen, insbesondere bei etwa 10 Hz. Sofern der Frequenzbereich F oberhalb der Netzfrequenz f0 liegt, liegt eine untere Grenzfrequenz des Frequenzbereichs F bei einer Netzfrequenz f0 von 50 Hz also vorzugsweise "irgendwo" zwischen 57 Hz und 63 Hz, beispielsweise bei 60 Hz. In analoger Weise liegt, sofern der Frequenzbereich F unterhalb der Netzfrequenz f0 liegt, eine obere Grenzfrequenz des Frequenzbereichs F bei einer Netzfrequenz f0 von 50 Hz also vorzugsweise "irgendwo" zwischen 37 Hz und 43 Hz, beispielsweise bei 40 Hz. Bei einer Netzfrequenz f0 von 60 Hz müssen zu den genannten Grenzfrequenzen jeweils 10 Hz addiert werden.

Vorzugsweise wird entsprechend der Darstellung in FIG 7 auch die in das Metall 2 bzw. die Metallschmelze 13 einzubringende Leistung P* als Funktion der Zeit t eingestellt, konkret in Abhängigkeit von vom Zustand Z. FIG 7 zeigt die bevorzugte Ausgestaltung, gemäß der die einzubringende Leistung P* während der Anfangsphase der Schmelzphase (Zustand Z = 1) einen relativ niedrigen Wert aufweist, während der Endphase der Schmelzphase (Zustand Z = 2) einen relativ hohen Wert aufweist und während der Flachbadphase (Z = 3) einen Wert zwischen dem Wert der Anfangsphase und der Endphase der Schmelzphase aufweist.

Im Schritt S14 ermittelt die Steuereinrichtung 9 eine Betriebsfrequenz fa für die erste Elektrode 6a. Die Ermittlung erfolgt derart, dass die Betriebsfrequenz fa innerhalb des momentan gültigen Frequenzbereichs F liegt. Die Betriebsfrequenz fa kann statisch sein. Alternativ kann sie zwar innerhalb des jeweiligen des jeweiligen Zustands Z statisch sein, aber vom Zustand Z abhängen. Wiederum alternativ kann sie - siehe FIG 6 - auch innerhalb des jeweiligen Zustands Z von der Zeit abhängen, beispielsweise vom Prozessfortschritt. In FIG 6 sind für den Zustand Z = 1 mögliche zeitliche Verläufe der Betriebsfrequenz fa sowohl für den Frequenzbereich F oberhalb als auch für den Frequenzbereich F unterhalb der Netzfrequenz f0 eingezeichnet. In der Praxis ist natürlich nur eine der beiden Betriebsfrequenzen fa gültig.

Im Schritt S15 ermittelt die Steuereinrichtung 9 eine Betriebsfrequenz fb für die zweite Elektrode 6b. Die Ermittlung erfolgt insofern individuell, als die Betriebsfrequenz fb nicht zwangsweise mit der Betriebsfrequenz fa übereinstimmen muss. Die Betriebsfrequenz fb kann also von der Betriebsfrequenz fa verschieden sein.

Es ist möglich, dass die Ermittlung des Schrittes S15 unabhängig von der Ermittlung des Schrittes S14 erfolgt. Es kann aber auch eine gewisse Abhängigkeit bestehen. Beispielsweise kann gefordert sein, dass die Betriebsfrequenz fb der zweiten Elektrode 6b einen Mindestabstand von der Betriebsfrequenz fa der ersten Elektrode 6a einhält. Alternativ kann gefordert sein, dass die Betriebsfrequenz fb der zweiten Elektrode 6b innerhalb des momentan gültigen Frequenzbereichs F liegt. Im übrigen sind die Ausführungen zur Ermittlung der Betriebsfrequenz fa der ersten Elektrode 6a in analoger Weise anwendbar.

Für die dritte Elektrode 6c ist keine Ermittlung einer Betriebsfrequenz mehr möglich. Denn die Betriebsweise der dritten Elektrode 6c ist dadurch festgelegt, dass die Ströme I durch die Elektroden 6a, 6b, 6c sich (unter Berücksichtigung des Vorzeichens der Ströme I) zu jedem Zeitpunkt zu Null ergänzen müssen. Bei mehr als drei Elektroden 6 kann jedoch auch für die dritte Elektrode 6c eine entsprechende Bestimmung erfolgen. Allgemein ist dies bei insgesamt n Elektroden 6 für n-1 Elektroden 6 möglich.

Im Schritt S16 ermittelt die Steuereinrichtung 9 die Ansteuerwerte A1 für die Energieversorgungseinrichtung 3. Die Steuereinrichtung 9 berücksichtigt bei der Ermittlung der Ansteuerwerte A1 die Betriebsfrequenzen fa, fb der ersten und der zweiten Elektrode 6a, 6b.

Sofern die Steuereinrichtung 9 auch die Positioniereinrichtung 7 steuert, ermittelt die Steuereinrichtung 9 im Schritt S17 Positionierungen pa, pb, pc für die erste, die zweite und die dritte Elektrode 6a, 6b, 6c. In diesem Fall ermittelt die Steuereinrichtung 9 im Schritt S18 die zugehörigen weiteren Ansteuerwerte A2. Es ist möglich, dass eine einheitliche Bestimmung für alle Elektroden 6 erfolgt. Ebenso ist es aber auch möglich, dass die Positionierungen pa, pb, pc individuell in Abhängigkeit davon erfolgen, ob die jeweilige Elektrode 6 die erste, die zweite oder eine andere Elektrode 6a, 6b, 6c ist.

Im Schritt S19 steuert die Steuereinrichtung 9 die Energieversorgungseinrichtung 3 entsprechend den ermittelten Ansteuerwerten A1 an. Sofern die Steuereinrichtung 9 auch die Positioniereinrichtung 7 steuert, steuert die Steuereinrichtung 9 im Schritt S19 auch die Positioniereinrichtung 7 mit den weiteren Ansteuerwerten A2 an.

Im Schritt S20 prüft die Steuereinrichtung 9, ob der jeweilige Zyklus des Betriebs des Lichtbogenofens abgeschlossen ist, d.h. das Metall 2 vollständig zu der Metallschmelze 13 geschmolzen ist und weiterhin die Metallschmelze 13, soweit erforderlich, weiter aufgeheizt ist. Wenn dies der Fall ist, geht die Steuereinrichtung 9 zum Schritt S3 über. Anderenfalls geht die Steuereinrichtung 9 zum Schritt S11 zurück.

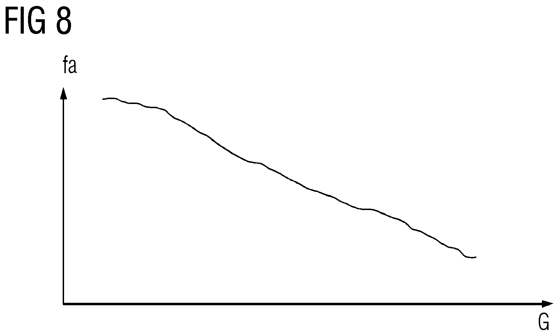

FIG 8 zeigt eine Möglichkeit zur Bestimmung der Betriebsfrequenz fa der ersten Elektrode 6a während der Schmelzphase. Die Abhängigkeit gemäß FIG 8 kann alternativ während der gesamten Schmelzphase oder nur während der Anfangsphase oder der Endphase der Schmelzphase bestehen. Gemäß FIG 8 bestimmt die Steuereinrichtung 9 die Betriebsfrequenz fa der ersten Elektrode 6a in Abhängigkeit von der Größe G der mittels der ersten Elektrode 6 einzuschmelzenden Stücke des Metalls 2. Insbesondere kann die Betriebsfrequenz fa der ersten Elektrode 6a mit zunehmender Größe G der Stücke des Metalls 2 monoton oder streng monoton abnehmen. Die Betriebsfrequenz fa der ersten Elektrode 6a wird also während der Schmelzphase vorzugsweise derart bestimmt, dass sie umso kleiner ist, je größer die mittels der ersten Elektrode 6a einzuschmelzenden Stücke des Metalls 2 sind. Eine analoge Vorgehensweise kann natürlich auch für die zweite Elektrode 6b und deren Betriebsfrequenz fb ergriffen werden. Im Falle der Vorgehensweise gemäß FIG 8 können sich - je nach Größe G der Stücke des Metalls 2 - unterschiedliche oder gleiche Betriebsfrequenzen fa, fb ergeben. Als Größe G kann beispielsweise ein statistischer Mittelwert der Größen der einzelnen Stücke des Metalls 2 verwertet werden. Alternativ kann ein Extremwert (Minimum oder Maximum) verwertet werden.

Die den Elektroden 6 zugeführten elektrischen Energien - also das Integral der den Elektroden 6 zugeführten elektrischen Leistungen - wird von der Steuereinrichtung 9 vorzugsweise derart bestimmt, dass die Elektroden 6 im zeitlichen Mittel jeweils die gleiche Energiemenge in das Metall 2 bzw. die Metallschmelze 13 einbringen. Das zeitliche Mittel wird hierbei nicht über eine einzelne Periode der jeweiligen Betriebsfrequenz fa, fb gebildet, sondern über eine Vielzahl von Perioden. Besonders bevorzugt ist eine Mittelung über eine jeweilige Betriebsphase des Lichtbogenofens, also entweder über die Anfangsphase der Schmelzphase, die Endphase der Schmelzphase und die Flachbadphase oder über die Schmelzphase und die Flachbadphase.

Die vorliegende Erfindung weist viele Vorteile auf. Insbesondere kann der Betrieb des Lichtbogenofens flexibel an die Bedürfnisse des Einzelfalls angepasst werden. Weiterhin kann oftmals die für das Erzeugen einer bestimmten Menge einer Metallschmelze 13 benötigte spezifische Energie (beispielsweise Kilowattstunden pro Tonne) verringert werden und kann oftmals auch die Zykluszeit reduziert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

### Bezugszeichenliste

- 1: Ofengefäß
- 2: Metall
- 3: Energieversorgungseinrichtung
- 4: Versorgungsnetz
- 5: Ofentransformator
- 6: Elektroden
- 7: Positioniereinrichtung
- 8: Doppelpfeil
- 9: Steuereinrichtung
- 10: Steuerprogramm
- 11: Maschinencode
- 12: Lichtbögen
- 13: Metallschmelze
- 14: Schlackenschicht
- 15: Bedienperson

- A1, A2: Ansteuerwerte
- f, fa, fb: Betriebsfrequenzen
- f0: Netzfrequenz
- F: Frequenzbereich
- G: Größe
- I, Ia, Ib, Ic: Elektrodenströme
- pa, pb, pc: Positionierungen
- P*: einzubringende Leistung
- S1 bis S20: Schritte
- t: Zeit
- U: Elektrodenspannungen
- Z: Zustand

## Patentansprüche

1. Betriebsverfahren für einen Lichtbogenofen, wobei eine Energieversorgungseinrichtung (3) des Lichtbogenofens zwischen einem Beschicken eines Ofengefäßes (1) des Lichtbogenofens mit Metall (2) in festem Aggregatszustand und einem Entnehmen einer Metallschmelze (13) aus dem Ofengefäß (1) aus einem Versorgungsnetz (4) elektrische Energie bezieht und die bezogene elektrische Energie über einen Ofentransformator (5) zumindest einer ersten, einer zweiten und einer dritten Elektrode (6a, 6b, 6c) des Lichtbogenofens zuführt, so dass sich zwischen den Elektroden (6) und dem Metall (2) bzw. der Metallschmelze (13) Lichtbögen (12) ausbilden, durch die das Metall (2) zu der Metallschmelze (13) geschmolzen wird,
**dadurch gekennzeichnet,**
**dass** die Energieversorgungseinrichtung (3) eine Betriebsfrequenz (fa) der ersten Elektrode (6a) und eine Betriebsfrequenz (fb) der zweiten Elektrode (6b) individuell einstellt.

2. Betriebsverfahren nach Anspruch 1,
**dadurch gekennzeichnet,**
**dass** die Betriebsfrequenz (fa, fb) für die erste und die zweite Elektrode (6a, 6b) voneinander verschieden sind.

3. Betriebsverfahren nach Anspruch 1 oder 2,
**dadurch gekennzeichnet,**
**dass** die Betriebsfrequenz (fa) der ersten Elektrode (6a) zeitlich variiert.

4. Betriebsverfahren nach Anspruch 3,
**dadurch gekennzeichnet,**
**dass** die Betriebsfrequenz (fa) der ersten Elektrode (6a) in Abhängigkeit von einem Prozesszustand des Lichtbogenofens variiert.

5. Betriebsverfahren nach Anspruch 4,
**dadurch gekennzeichnet,**
**dass** der Prozesszustand durch Auswertung elektrischer oder akustischer Betriebsgrößen des Lichtbogenofens ermittelt wird.

6. Betriebsverfahren nach einem der obigen Ansprüche
**dadurch gekennzeichnet,**
**dass** die Betriebsfrequenz (fb) der zweiten Elektrode (6b) unter Berücksichtigung der Betriebsfrequenz (fa) der ersten Elektrode (6a) eingestellt wird.

7. Betriebsverfahren nach einem der obigen Ansprüche
**dadurch gekennzeichnet,**
**dass** Elektroden (6) einer Gesamtheit von Elektroden (6) des Lichtbogenofens dynamisch zugeordnet wird, welche von ihnen die erste Elektrode (6a) ist und welche von ihnen die zweite Elektrode (6b) ist.

8. Betriebsverfahren nach Anspruch 7,
**dadurch gekennzeichnet,**
**dass** die Elektroden (6) der Gesamtheit von Elektroden (6) des Lichtbogenofens unabhängig voneinander höhenverstellbar sind und dass eine Positionierung (pa, pb, pc) der jeweiligen Elektrode (6) des Lichtbogenofens in Abhängigkeit davon bestimmt wird, ob sie die erste, die zweite oder eine andere Elektrode (6a, 6b, 6c) ist.

9. Betriebsverfahren nach einem der obigen Ansprüche
**dadurch gekennzeichnet,**
**dass** der Lichtbogenofen zwischen dem Beschicken des Ofengefäßes (1) mit dem Metall (2) und dem Entnehmen der Metallschmelze (13) aus dem Ofengefäß (1) zunächst in einer Schmelzphase und sodann in einer Flachbadphase betrieben wird, dass das Metall (2) in der Schmelzphase zu der Metallschmelze (13) geschmolzen wird und die Metallschmelze (13) in der Flachbadphase weiter aufgeheizt wird, und dass die Betriebsfrequenz (fa) der ersten Elektrode (6a) während der Schmelzphase in Abhängigkeit von der Größe (G) der mittels der ersten Elektrode (6a) einzuschmelzenden Stücke des Metalls (2) bestimmt wird.

10. Betriebsverfahren nach Anspruch 9,
**dadurch gekennzeichnet,**
**dass** die Betriebsfrequenz (fa) der ersten Elektrode (6a) während der Schmelzphase derart bestimmt wird, dass sie umso kleiner ist, je größer die mittels der ersten Elektrode (6a) einzuschmelzenden Stücke des Metalls (2) sind.

11. Betriebsverfahren nach Anspruch 9 oder 10,
**dadurch gekennzeichnet,**
**dass** das Versorgungsnetz (4) mit einer Netzfrequenz (f0) betrieben wird und dass die Betriebsfrequenz (fa) der ersten Elektrode (6a) während der Schmelzphase oder während einer Endphase der Schmelzphase größer als die Netzfrequenz (f0) ist.

12. Betriebsverfahren nach einem der obigen Ansprüche
**dadurch gekennzeichnet,**
**dass** den Elektroden (6) zugeführte elektrische Energien derart bestimmt werden, dass die Elektroden (6) im zeitlichen Mittel jeweils die gleiche Energiemenge in das Metall (2) bzw. die Metallschmelze (13) einbringen.

13. Steuerprogramm für eine Steuereinrichtung (9) eines Lichtbogenofens, wobei das Steuerprogramm Maschinencode (11) umfasst, der von der Steuereinrichtung (9) abarbeitbar ist, wobei die Abarbeitung des Maschinencodes (11) durch die Steuereinrichtung (9) bewirkt, dass die Steuereinrichtung (9) den Lichtbogenofen gemäß einem Betriebsverfahren nach einem der obigen Ansprüche betreibt.

14. Steuereinrichtung eines Lichtbogenofens, wobei die Steuereinrichtung mit einem Steuerprogramm (10) nach Anspruch 13 programmiert ist, so dass die Abarbeitung des Maschinencodes (11) durch die Steuereinrichtung (9) bewirkt, dass die Steuereinrichtung (9) den Lichtbogenofen gemäß einem Betriebsverfahren nach einem der Ansprüche 1 bis 5 betreibt.

15. Lichtbogenofen,
- wobei der Lichtbogenofen ein Ofengefäß (1) aufweist, das mit Metall (2) beschickbar und aus dem eine Metallschmelze (13) entnehmbar ist,
- wobei der Lichtbogenofen eine Energieversorgungseinrichtung (3) und Elektroden (6) sowie einen Ofentransformator (5) aufweist,
- wobei die Energieversorgungseinrichtung (3) eingangsseitig mit einem Versorgungsnetz (4) und ausgangsseitig über den Ofentransformator (5) mit den Elektroden (6) verbunden ist,
- wobei der Lichtbogenofen eine Steuereinrichtung (9) aufweist, von der zumindest die Energieversorgungseinrichtung (3) ansteuerbar ist,
- wobei die Steuereinrichtung (9) gemäß Anspruch 14 ausgebildet ist.
